# EUROPÄISCHE PATENTANMELDUNG

(11) **EP 0 719 996 A1**
(43) Veröffentlichungstag der Anmeldung: **03.07.1996**
(21) Anmeldenummer: 95120502.0
(22) Anmeldetag: 23.12.1995
(51) Int. Cl.: F26B 17/04

(54) **Verfahren zur energieeinsparenden und umweltverträglichen Trocknung von Futterstoffen und/oder feuchten Erntegütern in Anlagen mit Bandförderung und Vorrichtung zur Durchführung dieses Verfahrens**

(30) Priorität: 31.12.1994 DE 4447311
(71) Anmelder: Rossmann, Michael, D-82547 Beuerberg (DE)
(72) Erfinder: Rossmann, Michael, D-82547 Beuerberg (DE)

(57) **Zusammenfassung**

Die Erfindung betrifft ein Verfahren, um in Ernteguttrocknern mit Bandförderung, die Energieausnutzung und den Umweltschutz besonders zu berücksichtigen. Zur Durchführung dieser Aufgabe ist es erforderlich, im Gegensatz zu der bisher angewendeten Hochtemperaturtrocknung, im Niedertemperaturbereich zu trocknen, um damit regenerative Umweltwärme effektiver nutzen zu können bzw. rückzugewinnen. Zur Erfüllung dieser Forderung eignen sich Trockner mit Bandförderung. Der erfindungsgemäße Vorschlag bezieht sich auf ein gleichzeitig wirkendes Gegen- und Gleichstrom Luftströmungssystem in der Trockenkammer (1), wodurch die Flächennutzung im Bandtrockner erhöht wird und gleichzeitig das Temperaturgefälle zwischen Eingangs und Ausgangsluft reduziert werden kann. Diese Strömungscharakteristik wird erreicht, indem am Naßguteinlauf (A) sowie am Trockengutauslauf (B) erwärmte Luft eingeleitet wird und etwa mittig in einem gemeinsamen Strom (C) wieder ausgeleitet wird. Bevor sie ins Freie austritt, wird durch einen Wärmetauscher (6) ein großer Teil der Abwärme rückgewonnen und der Eingangsluft (E) wieder zugeführt. Wesentlich sind bei diesem Luftführungssystem auch die zueinander versetzten Luftumleitkammern (15,16) oberhalb und unterhalb der Förderbänder (2,3), die den Luftstrom kaskadenartig immer als Kreuzstrom durch die Trockenbandebenen führen.

## Beschreibung

Die Erfindung betrifft ein Verfahren um in Ernteguttrocknern mit Bandförderung eine vorteilhafte Energieausnutzung und umweltverträgliche Emissionen zu erreichen. Die Erfindung umfaßt weiterhin eine Vorrichtung zur Durchführung eines solchen Verfahrens.

Für die Trocknung von Erntegut, vor allem von Grünfutter, sind neben der natürlichen Sonnentrocknung eine Reihe mechanisierter und mit Wärmeenergie betriebener Trocknungsanlagen bekannt, die dem Landwirt die Möglichkeit geben, wetterunabhängig Futter von hoher Qualität zu erzeugen. Bei den meisten wird das zu trocknende Gut mit erwärmter Luft solange belüftet, bis sein Feuchtigkeitsgehalt auf Lagerfähigkeit abgesunken ist. Die Notwendigkeit derartige Trocknungsapparate zu schaffen, erkannte man schon zur Jahrhundertwende. Es wurden seither eine große Zahl von unterschiedlichen Konstruktionen vorgeschlagen. Bei allen ist festzustellen, daß die Energieausnutzung untergeordnet war und jegliche Belange des Umweltschutzes unbeachtet blieben. Auch kannte man die komplizierten bio-chemischen Vorgänge im Futtergut kaum, weswegen die Ergebnisse oftmals dem Zufall überlassen waren.

Analysiert man die verschiedenen Vorrichtungen, so ist festzustellen, daß bei allen ein Zusammenwirken einer Fördermechanik mit einem Belüftungssystem zu finden ist. Bei der Fördermechanik sind im wesentlichen die drei Vorschläge Schubwender; Trommel- und Bandförderer zu finden. Bei dem Belüftungssystem sind es Gleichstrom, Kreuzstrom und Gegenstrom.

Die schwierigste Aufgabe bei der Trocknung von Grüngut ist die Durchtrocknung der sehr unterschiedlichen Querschnitte, von dicken Stengeln gegenüber dünnen Blättchen. Letztere trocknen bekanntlich viel schneller und sollten, um keinen Schaden an ihren Nährstoffen zu erleiden, nach Abgabe ihres Feuchtegehaltes schnellstmöglich aus der Wärmezone wieder heraus. Zur Verbesserung dieser Problematik, wurden neuerdings auch Vorschläge bekannt, das zu behandelnde Gut einer Microwellenvorbehandlung auszusetzen, um die Zellstruktur vor der eigentlichen Trocknung aufzuspalten und damit auch größere Querschnitte der Warmluftbehandlung besser zugänglich zu machen.

Diese Schwierigkeit wurde durch das System der Trommeltrocknung noch am besten gelöst. Bei dieser wird die Förderung des Trockengutes durch die Luftsströmung selbst bewirkt, allerdings ist dies nur bei Gleichstrombetrieb möglich. Durch eine drehende waagerechte Trommel mit Schaufeln wird das zu trocknende Gut kontinuierlich gehoben und dann durch einen quer strömenden Heißluftstrom abgeworfen. Damit findet eine andauernde Luftsichtung statt, wodurch leichte und damit trockene Partikel von dem Heißluftstrom schon aus der Trockenzone herausgetragen werden, gegenüber schwerem und feuchten Stengelwerk, das viel häufiger aufgenommen wird. Neben dieser sehr einfachen und zuverlässigen Fördermethode erfordert dieses System eine sehr heiße Eingangssluft von bis zu 800° C wobei dann eine hohe Maschinenleistung erreicht werden kann. Die meisten derzeit betriebenen Trocknungsanlagen arbeiten daher auf diesem Prinzip. Systembedingt müssen diese aber eine gewisse Mindestgröße haben, um zu funktionieren. Das bedeutet, daß sie als Großtrockner nur auf genossenschaftlicher Basis betrieben werden können. Allein in der BRD sind es derzeit über 100 solcher Anlagen mit einer Jahreskapazität von etwa 400.000 t Trockengut - Futter in Form von Cobs (Pellets).

Durch das allgemein steigende Umweltbewußtsein geraten diese Großtrocknungsanlagen mit ihren nachteiligen Eigenschaften aber zunehmend unter Kritik. Da stehen die unangenehmen Emissionen der Geruchsbelästigung, der Ascheausstoß und der enorme Energieverbrauch im Vordergrund. Leider zeigen sich keine brauchbaren technischen Möglichkeiten, diese Mißstände zu beheben. So wäre eine Wärmerückgewinnung wegen dem großen Temperaturgefälle (8 fach) kaum wirkungsvoll, da die Eingangsluft von bis zu 800° C, eine Ablufttemperatur von etwa 100° C (heißer Naßdampf) gegenüber steht. Würde man diesen Anlagetyp mit Niedertemperatur (unter 200° C) betreiben würde er kaum noch funktionsfähig sein.

Einen weiteren Nachteil stellt die Vermischung der Trocknunsluft mit den Rauchgasen der Heizanlage dar. Je nach Schwefelgehalt des jeweils verwendeten Heizöles, entsteht auf dem Trocknungsgut ein Niederschlag von schwefeliger Säure. Daher kann diese Trocknungsart für viele Bereiche nicht akzeptiert werden. Ein unlösbares Problem ist auch ihr großer Einzugsbereich, wodurch die Aufwendungen für Antransport des Grüngutes von durchschnittlich 30 km, zum Trockner sehr kostenaufwendig werden. Wären diese Anlagen nicht so hoch subventioniert, wäre ihr Betrieb kaum noch finanziell tragbar.

In der Gruppe der Bandtrockner kommt als Fördermethode das luftdurchlässige Förderband zu Anwendung. Ein oder mehrere Endlosbänder bewegen das Grüngut über eine große Strecke durch eine Trockenkammer oder -kanal, wobei es mit erwärmter Luft angeblasen wird. Bei diesen Verfahren kann vorteilhafterweise auch mit niedrigen Temperaturen gearbeitet werden. Es zeigt sich hierbei, daß das Trockengut zwecks Durchtrocknung dicker Stengel verhältnismäßig lange in dem Warmluftstrom belassen werden muß. Dies ist in dreifacher Hinsicht nachteilig: Erstens braucht man eine längere Verweildauer im Trockner und damit eine große Trockenkammer. Zweitens wird dabei zwangsläufig der größte Teil des Gutes übertrocknet und damit sehr brüchig und drittens wirken zu hohe Temperaturen auf das gesamte Trockengut, welches zur Nährwerterhaltung nur niedrigen Temperaturen ausgesetzt werden darf.

Im Gegensatz zum Trommeltrocknungsverfahren, welches nur im Gleichstromprinzip arbeiten kann, bietet der Bandtrockner unterschiedliche Möglichkeiten der Luftführung. Man muß unterscheiden, wie sich die Förderrichtung des Trockengutes zur Blasrichtung des Warmlufstromes verhält. Sie können sich im Gegen- oder im Gleichstrom bzw. auch im Kreuzstrom zueinander bewegen. Alle drei Fälle sind möglich und kommen auch zur Anwendung.

Die einfachste Anordnung ist hierbei ein möglichst waagerecht verlaufendes Endlosband, das die Schüttung des zu behandelnden Gutes kontinuierlich durch eine Trockenkammer bewegt, und nach entsprechender Verweildauer trocken wieder ausbringt. Das zu trocknende Gut wird darin undefiniert beblasen. Diese Art der Trocknung zeigt sich aber ungünstig in bezug auf Wärmeausnutzung. Schon besser ist hier ein gleichmäßiges Durchblasen der Schüttung mit einem definierten Kreuzstrom, z. B. von unten, doch wird auch hier keine gute Wärmeausnutzung erreicht. Ein weiterer Nachteil bei dieser kontinuierlichen Förderung durch einen Trockentunnel bereiten die Luftschleusen an Ein- und Auslauf. Sowohl für Unterdruck- als auch für Überdruckbetrieb müssen diese Schleusen möglichst dicht abschließen, um nachteilige Wirkungen durch Falschluft zu vermeiden.

Ein weiterer Vorschlag, um eine möglichst günstige Nutzung der Trockenkammer und der Wärmeausnutzung zu erhalten, stellt die Anordnung mehrerer Trockenbänder versetzt übereinander, in einer Trockenkammer dar. Das Gut wird dabei in mäandrierender Linie von oben nach unten gefördert, wobei die Trockenluft von unten nach oben strömt. Mit dieser Anordnung werden die einzelnen Trockenebenen im Kreuzstrom durchlüftet, wobei die Gesamtanordnung in der Trockenkammer aber als Gegenstromsystem angesehen werden muss. Speziell bei Halmgütern zeigte sich hier aber der Nachteil, daß an den Übergabestellen der Trockenebenen zur nächst unteren, bei zunehmender Trockenheit eine Verstopfungsgefahr eintritt, denn umso trockener und damit leichter das Gut wird, um so weniger reicht seine eigene Schwerkraft aus, gegen den Luftstrom nach unten zu fallen. Es wurde auch vorgeschlagen, bei diesen übereinander angeordneten Trockenbändern eine sich verlangsamende Bandgeschwindigkeit vorzusehen, damit der Volumenschwund des Trockengutes, der durch den Wasserentzug entsteht, kompensiert werden kann und damit die Trocknungsflächen besser genutzt werden können. In der Praxis hat sich aber gezeigt, daß der Trockengutteppich, der dann zwischen zwei Bändern mit verschiedener Geschwindigkeit gefördert wird, sofort zur Bildung von immer dickeren Wickeln führt, was die Trocknungswirkung völlig zum Erliegen bringt.

Bei den meisten bekannten Methoden in Bandtrocknern wird das Trockengut um feuchte Kissen zu verhindern, bewegt, gewendet, verwirbelt usw. So wirkungsvoll diese Mechanik auch erscheint, so nachteilig wirkt sie sich auf das feine, nährstoffreiche Blattgut aus. Dieses ist bekanntlich mit fortgeschrittenem Trockenheitsgrad sehr brüchig, und wird bei allen diesen Bewegungen von seinem Trägerstengel abgeschlagen und kommt als Bröckelgut nicht mehr im bestimmungsgemäßen Trockengut an.

Im Gegensatz hierzu, ist die Förderung auf einer Bandebene durch eine längere Trockenkammer zuverlässiger, jedoch zeigen bisherige Vorschläge ungünstige Verhältnisse für eine intensive Umspülung des zu behandelnden Gutes mit der Trocknungsluft. Andererseits zeigt dieses System absolute Zuverlässigkeit bezüglich einer Verstopfungsgefahr bei der Trocknung auch von angewelktem Grüngut.

Kommt die Gleichstrombelüftung zur Anwendung, wird das zu trocknende Gut, in seinem feuchtesten Zustand mit der heißen Trocknungsluft umströmt und gibt dabei, ähnlich wie bei den Trommeltrocknern, unter starkem Temperatursturz, sehr rasch Feuchtigkeit an die Trocknungsluft ab. Diese erreicht bald ihren Sättigungspunkt worauf eine weitere Trocknung stagniert. Würde diese Situation noch in der Trockenkammer auftreten, würde das Gut im noch feuchtem Zustand wieder aus dem Trockner gefördert. Damit diese Situation nicht eintreten kann, muss der Trockner so reguliert werden, daß die Trocknungsluft bis zum Ende des Trocknungsprozesses noch Kapazität zur Wasseraufnahme hat, was schlußendlich einen erheblichen Energieverlust bedeutet.

Im Gegenstrombetrieb ist es genau umgekehrt. Die heiße Trocknungsluft kommt zuerst mit dem schon trockenen Gut in Berührung. Bei zunehmender Feuchtigkeit erreicht sie ebenfalls diesen Sättigungspunkt, jedoch in Richtung Trockenguteinlauf, wo das Gut sowieso noch feucht ist. Dieser Sättigungspunkt der Trocknungsluft wird daher bewußt in den Trockner gelegt, um eine optimale Wärmeausnutzung zu erhalten. Bei dieser im Gegenstromprinzip vorteilhaften hohen Wärmeausnutzung muß eine schlechte spezifische Trocknerleistung in Kauf genommen werden.

Der Bandfördertrockner zeigt hier die günstigeren Vorgaben. Bei der Gegenüberstellung dieser beiden Grundprinzipien ist festzustellen, daß allein schon durch die Bedingung, mit Niedrigtemperaturen auszukommen, der Trommeltrockner ausscheidet. Eine vorteilhafte Lösung zeigt in einem Bandfördertrockner die gleichzeitige Anwendung beider Strömungssysteme. Es wird dadurch möglich, ausschließlich die Vorteile dieser beiden Prinzipien zu kombinieren. Aus dieser Anordnung resultieren aber noch weitere Vorteile, vor allem, der sehr effektiv möglich gewordene Einsatz der Wärmerückgewinnung.

Die Aufgabe der Erfindung ist es, einen hofeigenen Kleintrockner vorzuschlagen, der die genannten Kriterien bezüglich Umweltverträglichkeit bei Emisionen und Energieausnutzung erfüllt. Dies wird erfindungsgemäß durch das Verfahren, gem. den Ansprüchen 1 bis 7, sowie durch die dargelegte Vorrichtung, gem. den Ansprüchen 8 bis 10, gelöst.

Zur Lösung des gestellten Problemes im Bandfördertrockner, sind drei von einander abhängige Bereiche zu beachten und aufeinander abzustimmen.
- Der erste Bereich ist der strömungstechnische Vorgang der Trocknungsluft,
- der zweite Bereich ist die thermische Abstimmung der Trocknungsluft
- der dritte Bereich ist die Bewegung des zu behandelnden Gutes durch Anordnung und Lauf der Förderbänder
Der strömungstechnische Vorgang in der Trockenkammer ist vorteilhafterweise so zu gestalten, daß sowohl Gleich- als auch Gegenstrom, gleichzeitig miteinander kombiniert sind. Das geschieht dadurch, daß am Einlauf des Naßgutes, sowie am Auslauf des Trockengutes erwärmte Luft in die Trockenkammer eingeleitet wird und etwa in der Mitte, wo beide Luftströme zusammentreffen, diese wieder gemeinsam ausgeleitet werden.

Diese Gegeneinanderströmung wird zweckmäßigerweise mit Hilfe eines Ventilators durch Saugwirkung erzeugt, sie kann aber auch durch Einblasen an beiden Seiten erfolgen. Um nun eine vorteilhafte definierte Kreuzströmung durch das zu trocknende Gut zu erhalten, werden oberhalb und unterhalb des Trockenbandes versetzt Strömungsumkehrkammern angeordnet, die die gesamte Trockenbandfläche in eine Vielzahl von Einzeltrockenflächen aufteilen. Beide Luftströmungen sind somit gezwungen, in wiederholender Weise, das zu trocknende Gut quer zu durchströmen.

Der thermische Vorgang ist wesentlich auf den unterschiedlich stattfindenden Abtrocknungsgrad und damit Verträglichkeitsgrad des Trockengutes abzustimmen. So ist es erforderlich, die Temperaturen und Quantitäten der beiden eingeleiteten Luftströme getrennt steuern zu können. Dabei kann die Eingangsluft auf der Naßgutseite mit wesentlich höherer Temperatur abgemischt werden als die Eingangsluft auf der Trockengutseite.

Das Naßgut wird bei Eintritt in die Trocknungskammer nun in erster Stufe mit heißer trockener Luft im Gleichstromprinzip durchströmt. Dabei beginnt sofort eine rege Verdampfung, wobei die Temperatur rasch abnimmt und sich mit Feuchtigkeit anreichert. Im weiteren Verlauf erwärmt sich das Trocknunsgut auch im Kern und die Trocknungsluft erreicht ihre maximale Sättigung. Der vorher erwähnte Sättigungspunkt tritt nun ein, kann sich aber nicht nachteilig auswirken, da das Gut nun in der zweiten Stufe mit erneuter Warmluft im Gegenstrom weiter getrocknet wird. Durch Regulierung von Trockengutmenge und Fördergeschwindigkeit sollte dieser Punkt möglichst nahe an die Austrittstelle der Luft gelegt werden, wobei sich bei etwaigen Regelungsungenauigkeiten ein nur geringfügiger Verlust einstellt. An dieser Stelle wird nun die mit Feuchtigkeit gesättigte Warmluft aus der Trockenkammer abgeleitet. Sie sollte 80°C nicht überschreiten.

Ab hier beginnt nun das Gegenstromprinzip, da der am Auslauf-Trockengut eingeleitete Luftstrom ebenfalls hier abgesaugt wird. Dieser zweite Luftstrom dient zur Nachtrocknung des schon stark angetrockneten Gutes. Dieser Luftstrom, der ebenfalls von dem Warmlufterzeuger stammt wird so abgemischt, daß er höchstens 120 °C hat. Die Luftmenge ist so einzustellen, daß sie an der Absaugstelle sich ebenfalls auf c.a. 80 °C abgekühlt hat.

Vorteilhafter Weise wird den Trockenzonen eine Kühlzone nachgeschaltet, in welcher das noch warme Trockengut mit Aussenluft abgekühlt wird. Die dabei erwärmte Kühlluft, die kaum Feuchtigkeit aufgenommen hat, kann der Trocknungsluft in der zweiten Zone direkt beigemischt werden. Durch Feuchtigkeitsmessung dieser Kühlluft ist es einfach, den Zieltrockenheitsgrad des Gutes zu bestimmen und damit die Maschinensteuerung zu beeinflussen.

Dieser gemeinsame Abluftstrom mit einer Temperatur von c.a. 80 °C und maximaler Feuchtigkeits - Sättigung wird nun über einen Wärmetauscher ins Freie abgeblasen. Durch das Temperaturgefälle zur Aussenluft wird in diesem Wärmetauscher durch Kondensation weit mehr Wärme zur Vorwärmung der Eingangsluft abgegeben als diese aufnehmen kann. Die Eingangsluft wird also nahe an die Ablufttemperatur vorgewärmt. Als weitere vorteilhafte Nebenwirkung des Wärmetauschers entsteht durch seine Kondensation praktisch keine Geruchsbelästigung. Auch wird die Geräuschentwicklung des Ventilators stark gedämpft.

Für die Anordnung der Förderbänder ist es vorteilhaft, daß im Bereich des Naßgutes, also im Gleichstrombereich, die Trockenkammer so ausgebildet ist, daß mehrere Bänder versetzt übereinander angeordnet werden können. Im Bereich der Nachtrocknung, also im Gegenstrombereich ist es vorteilhafter, das Gut auf einer Ebene zu bewegen und um ein Verblasen des Trockengutteppichs zu vermeiden, ein zweites, darüber liegendes abdeckendes Gitterband mitlaufen zu lassen.

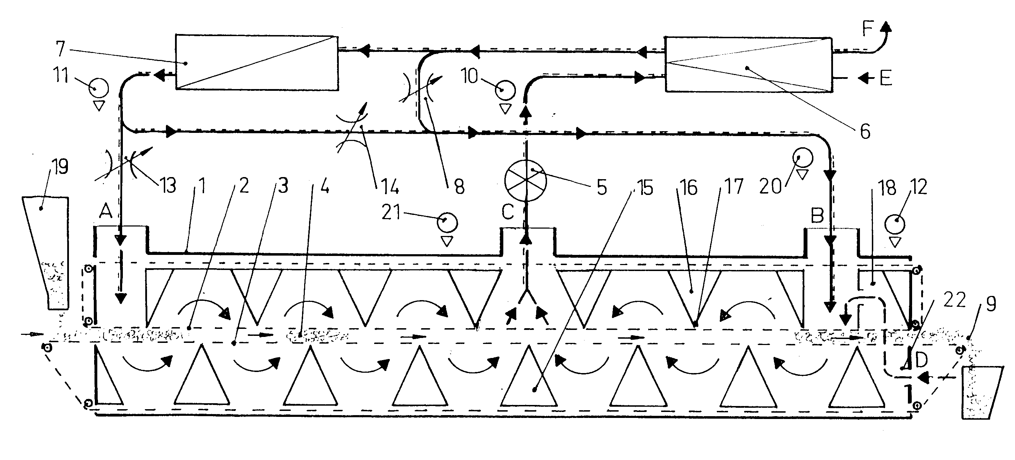

### Beschreibung der Figur 1

Die Erfindung soll anhand einer Figur näher erläutert werden. Die Figur zeigt hierbei den prinzipiellen Aufbau einer erfindungsgemäßen Vorrichtung zur Durchführung des Verfahrens zur energieeinsparenden und umweltverträglichen Trocknung von Futterstoffen und/oder feuchten Erntegütern in Anlagen mit Bandförderung.

Die gezeigte Vorrichtung dient im vorliegenden Beispiel zur kontinuierlichen Trocknung von Erntegut vor allem feuchtem oder erntefrischen Grünpflanzen, bespielsweise Gras.

Diese Vorrichtung besteht aus einer langgezogenen Trocknungskammer **1**, durch die in der Längsebene ein luftdurchlässiges Endlosförderband **3** angeordnet ist und an beiden Seiten aus der Trockenkammer herausragt. Auf diesem wird das zu trocknende Gut **4** durch die Strömungszonen **A-C**, **B-C** sowie **B-D** gefördert. Die Rücklaufstrecke dieses Bandes verläuft wieder in die Trockenkammer **1** zurück. Es gleitet hierzu auf deren Boden und reinigt diesen dabei kontinuierlich von durchfallendem Rieselgut . Ein zweites luftdurchlässiges Band **3** ist oberhalb des Förderbandes **2** angeordnet und schützt das Gut **4** vor Verblasen. Es liegt locker auf dem Gut **4** auf und wird mit gleichet Bandgeschwindigkeit angetrieben. Beide Bandsysteme werden von einem drehzahlvariablen Antriebsmotor angetrieben. Oberhalb der Trockenkammer befinden sich die Module zur Luftaufbereitung, sie bestehen aus Ventilator **5** , Wärmetauscher **6,** Warmlufterzeuger **7** und Luftführungskanälen mit den Drosselklappen **8, 13 u. 14**.

An beiden Enden dieser Trocknungskammer befinden sich die Lufteinlässe **A** u. **B** für die erwärmte Trocknungsluft. In etwa der Mitte befindet sich der gemeinsame Luftaustritt **C**, an dem ein Absaugventilator **5** plaziert ist. Das ganze System arbeitet im Unterdruck, wodurch folgender Luftkreislauf zustande kommt. Die Luft strömt mit normaler Außentemperatur und Anfangsfeuchte durch den Sekundärkreislauf **E** des Wärmetauschers **6**, wo sie von der noch warmen und mit Feuchtigkeit gesättigten Abluft auf nahezu die Temperatur der Abluft vorgewärmt wird. In diesem Zustand wird sie in einen Hauptstrom **A** und einen Nebenstrom **B** aufgeteilt. Der Hauptstrom , der einen wesentlich größeren Volumenstrom bildet, wird durch den Warmlufterzeuger **7** auf bis zu 400° weiter aufgeheizt und an der Einlaufseite **A** in die Trockenkammer **1** eingeleitet. Der Nebenstrom **B** , der zur Nachtrocknung dient, wird an der Auslaufseite **B** in die Trockenkammer **1** eingeleitet. Da die Temperatur dieses Nebenstromes vom Wärmetauscher nur auf max. seiner Primärtemperatur vorgewärmt werden kann, ist es je nach Trockengut erforderlich, diese anzuheben, wobei 120° C nicht überschritten werden darf Dazu wird aufgeheizte Luft aus dem Hauptstrom durch die Drosselklappe **14** beigemischt. Es ist erforderlich, daß dieser Nebenstrom in seinem Volumen regelbar ist, weswegen eine zweite Drosselklappe **8** vorgesehen ist. Mit diesen zwei Drosselklappen **8** u. **14** lassen sich Volumenstrom und Temperatur der Strömungszone B, der Nachtrocknung, exakt regeln. Es ist vorteilhaft die Anfangstemperatur 120° und die Endtemperatur 80° konstant zu halten. Das geschieht durch die Thermostate **10** u. **20.** Der Meßpunkt für die Anfangstemperatur stellt die Drosselklappe **13**, der Meßpunkt Endtemperatur stellt die Drosselklappe Seite 8**14**. Eine weitere Strömungszone **D-B,** zur Nachkühlung, folgt im Anschluß an die vorangegangenen Zonen und ist im Schleusenkanal **18**. Hier ist der Feuchtesensor **12** zur Feuchtemessung positioniert, der durch Steuerung der Durchlaufszeit die Zielfeuchte des Trockengutes überwacht. Mit der Drosselklappe **22** kann dazu auch noch die Quantität des Luftstromes **D-B** geregelt werden. Damit diese Luftströme wirkungsvoll das zu trocknende Gut im Kreuzstrom durchdringen, müssen in der Trocknungskammer Strömungswege durch entsprechende Abschottungen vorgesehen werden. Dazu sind oberhalb und unterhalb der Förderebene Luftleitsegmente **15** u. **16** versetzt zueinander angeordnet. Um Falschluft zu vermeiden sind die Luftleitsegmente **16** an der Unterseite mit einer flexiblen Abdichtlippe **17** versehen, die auf der Gitterbahn **2** schleift.

Zur Steuerung des Trockenvorganges und damit des Trockenheitsgrades werden zwei Verstellmöglichkeiten vorgesehen. Es sind dies erstens die Durchlaufszeit und damit die Verweildauer des Gutes in der Trockenkammer und zweitens die Schüttmenge des zu trocknenden Gutes. Da beide Parameter voneinander in Abhängigkeit stehen, ist je nach Anfangsfeuchtigkeit eine passende Schüttmenge zu wählen. Die Durchlaufszeit ist dann durch eine stufenlos regelbare Bandgeschwindigkeit so zu regeln, daß der angestrebte Trockenheitsgrad von beispielsweise 12% erreicht wird.

## Patentansprüche

1. Verfahren zur energieeinsparenden und umweltverträglichen Trocknung von Futterstoffen und/oder feuchten Erntegütern in Trocknungsanlagen mit Bandförderung **dadurch gekennzeichnet**, daß
a) mindestens zwei gegeneinander gerichtete Strömungszonen erwärmter Luft das zu trocknende Gut behandeln, wobei die Förderrichtung des Gutes zuerst die Strömungszone des Gleichstromes und danach die Strömungszone des Gegenstromes durchläuft,
b) die Anfangstemperaturen und Luftmengen beider Zonen geregelt werden können, wobei mehrere Meßwertgeber eine optimale Einstellung, automatisch oder von Handeinstellung ermöglichen,
c) die ausgeleitete, feuchte Trocknungsluft und gegebenenfalls auch sonstige entstandene Prozesswärme einer Abwärmerückgewinnung zur Vorwärmung der Eingangsluft zugeführt werden.

2. Verfahren nach Anspr. 1 dadurch gekennzeichnet, daß die Luftströmung durch Leiteinrichtungen in der Trockenkammer die Förderebene mehrmals als Kreuzstrom durchströmt.

3. Verfahren nach Anspr. 1 dadurch gekennzeichnet, daß die Luftströmung in der Trockenkammer sowohl im Unterdruck als auch im Überdruck oder unter gleichzeitiger Anwendung von beidem, erzeugt wird.

4. Verfahren nach Anspr. 1 dadurch gekennzeichnet, daß das getrocknete Gut vor Austritt aus der Trockenkammer eine Kühlzone passiert, wobei die zum Kühlen erforderliche Frischluft im Gegenstrom zur Förderrichtung durch das Trockengut eingeleitet wird und sodann in angewärmtem Zustand der Trockenluft beigemischt wird.

5. Verfahren nach Anspr. 1 dadurch gekennzeichnet, daß das auf dem Transportband befindliche Gut vor Verblasen durch ein locker darüber angeordnetes mitlaufendes, ebenfalls luftdurchlässiges Band, gesichert wird.

6. Verfahren nach Anspr. 1 dadurch gekennzeichnet, daß das Förderband der untersten Förderbandebene im Bereich seines Rücklaufes durch Gleiten auf dem Boden der Trockenkammer eine Reinigungsfunktion übernimmt und damit das durchfallende Bröckelgut wieder ausbringt.

7. Verfahren nach Anspr. 1 dadurch gekennzeichnet, daß in der ersten Trocknungszone A des Gleichstromes auch mehrere versetzt übereinander angeordnete Förderbandebenen eine längere Vortrocknung ermöglichen.

8. Vorrichtung zur Durchführung des Verfahrens nach Ansprüchen 1 bis 7 **bestehend aus** einer langgezogenen Trockenkammer **1** bei welcher am Eingang **A** und am Ausgang **B** ein Warmluftstrom aus dem Lufterhitzer **7** eingeleitet wird, der durch die versetzt angeordneten Luftleitsegmente **15** u.**16** in mäandrierendem Richtungswechsel durch die Trockenbandfläche geführt wird, etwa in der Mitte durch einen Absaugventilator **5** gemeinsam angesaugt wird und über einen Wärmetauscher **6** ins Freie abgeblasen wird.

9. Vorrichtung nach Anspr. 4, bestehend aus einem Schleusenkanal **18**, durch den die Bandförderung die Trockenkammer **1** verlässt, wobei mit der Luftdosierungsklappe **22** eine definierte Menge Frischluft entgegen der Förderrichtung eingeleitet werden kann und damit unter Wärmerückgewinnung das trockene und noch warme Gut abkühlt.

10. Vorrichtung nach Anspr. 6, bestehend aus einem luftdurchlässigen Endlosband **3**, welches horizontal durch die Trockenkammer **1** geführt ist und einerseits das Trockengut **4,** das von der Aufgabeeinrichtung **19** mit einem gleichmäßigen Gutbelag bestreut wurde, durch die Trockenkammer **1** fördert und nach Austritt **9**, als Trockengut abwirft und andererseits wieder in die Trockenkammer zurück geführt ist, um das durchfallende Rieselgut aus der Trockenkammer stetig herauszufördern,

11. Vorrichtung nach Anspr. 5 bestehend aus einem luftdurchlässigen Endlosband **2,** welches oberhalb von Band **3** mit gleicher Geschwindigkeit angetrieben, während des Durchganges durch die Trockenkammer nur locker auf dem Gut aufliegt und damit ein Verblasen verhindert.
